# EUROPÄISCHE PATENTANMELDUNG

(11) **EP 2 626 320 A1**
(43) Veröffentlichungstag der Anmeldung: **14.08.2013**
(21) Anmeldenummer: 13000467.4
(22) Anmeldetag: 31.01.2013
(51) Int. Cl.: B65G 1/04, B65G 1/137

(54) **Regallagervorrichtung zum wahlweisen Ein-/Auslagern von Lagergut und Verfahren zum Betreiben einer derartigen Regallagervorrichtung**

(30) Priorität: 10.02.2012 DE 102012002482
(71) Anmelder: Aberle GmbH, 74211 Leingarten (DE)
(72) Erfinder: Scholz, Dieter, D-67714 Waldfischbach-Burgalben (DE); Kölmel, Stephan, D-75050 Gemmingen (DE)
(74) Vertreter: Clemens, Gerhard

(57) **Zusammenfassung**

Eine Regallagervorrichtung (10) zum wahlweisen Ein-/Auslagern von Lagergut (28) mit einer Regallagereinrichtung (12), einer Wareneingangs-/ausgangseinrichtung, einem Regalbediengerät (20) zum Transport des Lagerguts (28) beim Ein-/Auslagervorgang, das heißt von der Wareneingangs-/ausgangseinrichtung zur Regallagereinrichtung (12) und umgekehrt, einer Steuereinrichtung zum Steuern der Bewegung des Regalbediengeräts (20), einer Speichereinrichtung zum Speichern der relevanten Daten des Lagerguts (28), einem Materialflussrechner (30), Mitteln zum Übergeben des Lagerguts (28) zwischen Wareneingangs-/ausgangseinrichtung, Regalbediengerät (20) und Regallagereinrichtung (12), gekennzeichnet dadurch, dass auf/an dem Regalbediengerät (20) eine Robotereinrichtung angeordnet ist, die mit einer Steuereinrichtung, der Speichereinrichtung und/oder dem Materialflussrechner (30) in Kommunikationsverbindung steht, auf/an dem Regalbediengerät (20) zumindest ein Behältnis (24) für das Lagergut vorhanden ist, die Robotereinrichtung das Lagergut (28) in Abhängigkeit der Kommunikation mit der Steuereinrichtung, der Speichereinrichtung und/oder dem Materialflussrechner (30) beim Ein-/Auslagervorgang jeweils als Einzelteile handhabt und aus der Regallagereinrichtung in das Behältnis (24) einlagert oder aus dem Behältnis (24) in die Regallagereinrichtung auslagert, das heißt eine Kommissionierung in oder aus dem Behältnis (24) auf dem Regalbediengerät (20) stattfindet.

## Beschreibung

### TECHNISCHES GEBIET

Die vorliegende Erfindung betrifft eine Regallagervorrichtung zum wahlweisen Ein-/Auslagern von Lagergut mit einer Regallagereinrichtung, einer Wareneingangs-/ausgangseinrichtung, einem Regalbediengerät zum Transport des Lagerguts beim Ein-/Auslagervorgang, das heißt von der Wareneingangs-/ausgangseinrichtung zur Regallagereinrichtung und umgekehrt, einer Steuereinrichtung zum Steuern der Bewegung des Regalbediengeräts, einer Speichereinrichtung zum Speichern der relevanten Daten des Lagerguts, einem Materialflussrechner, Mitteln zum Übergeben des Lagerguts zwischen Wareneingangs-/ausgangseinrichtung, Regalbediengerät und Regallagereinrichtung.

Die vorliegende Erfindung betrifft auch ein Verfahren zum Betreiben einer derartigen Regallagervorrichtung.

### STAND DER TECHNIK

Es sind Lagersysteme bekannt, bei denen Lagergut in Form von Paletten, Kartons in der Eingangsstelle ankommen, die dann individuell mittels Transportwagen in vorgegebene Räume gefahren und dort gelagert werden. Zur Abarbeitung von kundenspezifischer Aufträge werden die Lagergutbehälter zusammengestellt und der Auftrag wird im Warenausgang spezifisch extern sortiert zusammengestellt und versandt. Daran anschließend werden die Behältnisse wieder in ihre Regaleinrichtungen verbracht. Dieses Vorgehen ist sehr personalintensiv und mit hohen Kosten verbunden. Aufgrund des Transports auf normalen Transportwegen steht ein großes Gefahrenpotential insbesondere hinsichtlich Unfällen, wobei die Gefährlichkeit bei der Lagerung von giftigen Stoffen drastisch erhöht wird. Darüber hinaus sind bei derartigen Lagersystemen strenge Unfallverhütungsvorschriften der Berufsgenossenschaft zu beachten, die ein eingehalten und kontrolliert werden müssen.

Im Rahmen einer weiteren bekannten Regallagervorrichtung arbeiten Werker am Wareneingang und setzen die ankommende Waren in Inlays oder Behältnisse um. Daran anschließend wird das Lagergut validiert und die Behältnisse werden einem Turmspeicher und/oder Vorzonenpuffer zugeführt. Unter Einsatz einer Steuereinrichtung und eines Materialflussrechners werden die einzulagernden Behältnisse mit dem darin gelagerten Lagergut einem Regalbediengerät zugeführt, das mit dem Behältnis an die vorherbestimmte Position innerhalb der Regallagereinrichtung heranfährt und den Behälter in die Regallagereinrichtung einsortiert. Beim Auslagern fährt das Regalbediengerät - gesteuert von der Steuereinrichtung - an die entsprechende Position innerhalb der Regallagereinrichtung, entnimmt das Behältnis und bringt dieses zum Warenausgang. Im Warenausgang nehmen das Werker eine manuelle Sortierung des Lagerguts aus dem Behälter im Hinblick auf den kundenspezifischen Auftrag vor. Gleichzeitig erfolgt auch eine Validierung des Lagerguts. Ist der kundenspezifische Auftrag abgearbeitet, wird das nicht mehr benötigte Behältnis mit dem Restlagergut wieder unter Einsatz des Regalbediengeräts in der Regallagereinrichtung eingelagert. Bei den bekannten Regallagervorrichtungen erfolgt die Sortierung und Validierung des einzelnen Lagerguts extern beim Wareneingang beziehungsweise Warenausgang, wobei die das Regalbediengerät jeweils Behälter in der Regallagereinrichtung einbeziehungsweise auslagert, die einzelne Lagergutkomponenten beinhalten und die aus dem Behälter heraus einzeln separat zu einem kundenspezifischen Auftrag im Bereich der Wareneingangs- und ausgangseinrichtung von Werkern sortiert und validiert werden.

### DARSTELLUNG DER ERFINDUNG

Ausgehend von dem genannten Stand der Technik liegt der vorliegenden Erfindung die Aufgabe beziehungsweise das technische Problem zugrunde, eine Regallagervorrichtung zum wahlweisen Ein-/Auslagern von Lagergut der eingangs genannten Art anzugeben, die einen hohen Automatisierungsgrad aufweist, hohe Personalkosten vermeidet, wirtschaftlich hergestellt werden kann und eine dauerhaft zuverlässige Funktion gewährleistet. Der vorliegenden Erfindung liegt weiterhin die Aufgabe beziehungsweise das technische Problem zugrunde ein Verfahren zum Betreiben einer derartigen Regallagervorrichtung anzugeben, das eine wirtschaftliche Umsetzung ermöglicht.

Die erfindungsgemäße Regallagervorrichtung ist durch Merkmale des unabhängigen Anspruchs 1 gegeben. Vorteilhafte Ausgestaltungen und Weiterbildungen sind Gegenstand der von dem unabhängigen Anspruch 1 direkt oder indirekt abhängigen Ansprüche. Die erfindungsgemäße Regallagervorrichtung zeichnet sich demgemäß dadurch aus, dass auf/an dem Regalbediengerät eine Robotereinrichtung angeordnet ist, die mit einer Steuereinrichtung, der Speichereinrichtung und/oder dem Materialflussrechner in Kommunikationsverbindung steht, auf/an dem Regalbediengerät zumindest ein Behältnis für das Lagergut vorhanden ist, die Robotereinrichtung das Lagergut in Abhängigkeit der Kommunikation mit der Steuereinrichtung, der Speichereinrichtung und/oder dem Materialflussrechner beim Ein-/Auslagervorgang jeweils als Einzelteile handhabt und aus der Regallagereinrichtung in das Behältnis einlagert oder aus dem Behältnis in die Regallagereinrichtung auslagert, das heißt eine Kommissionierung in oder aus dem Behältnis auf dem Regalbediengerät stattfindet.

Eine besonders bevorzugte Ausgestaltung der erfindungsgemäßen Regallagervorrichtung zeichnet sich dadurch aus, dass das Regalbediengerät Mittel zum Ermitteln der individuellen Kenndaten des einzelnen Lagerguts aufweist, wobei die Robotereinrichtung das Lagergut diesen Mittel beim Ein-/Auslagervorgang zuführt und die ermittelten Werte an die Steuereinrichtung, Speichereinrichtung und/oder den Materialflussrechner übermittelt und abgeglichen werden.

Im Gegensatz zum Stand der Technik, in dem entweder nur Behälter oder Tablare ein- oder ausgelagert beziehungsweise transportiert werden, arbeitet das Regalbediengerät bei der erfindungsgemäßen Regallagervorrichtung mit Ein- beziehungsweise Auslagerung des individuellen Lagerguts, das im Behälter beziehungsweise im Tablar angeordnet ist, auf dem Regalbediengerät, indem diese entsprechend der Vorgaben der Steuereinrichtung beziehungsweise des Materialflussrechners gehandhabt werden. Durch die Robotereinrichtung ist es möglich, direkt auf die Gegenstände im Behälter Bezug zu nehmen und diese vor Ort beim Ein- beziehungsweise Auslagervorgang auf dem Regalbediengerät anzusprechen, zu validieren und zu sortieren. Somit findet die Kommission eines Auftrags auf dem Regalbediengerät statt. Dies hat zur Folge, dass nur diejenigen Lagerteile beim Auslagervorgang ausgelagert werden, die auch dem kundenspezifischen Auftrag entsprechen. Unnötige Transportwege eines Behälters, von dem lediglich ein Teil des sich im Behälter befindlichen Lagerguts benötigt wird, unterbleibt vollständig, da die Sortierung, Kommissionierung und Validierung direkt vor Ort in der Ein- beziehungsweise Auslagerposition erfolgt.

Eine besonders bevorzugte Ausgestaltung der erfindungsgemäßen Regallagervorrichtung zeichnet sich dadurch aus, dass Mittel zum Ermitteln der Geometrie des Lagerguts vorhanden sind, wodurch von vorn herein auf die Geometrie der Regallagereinrichtung mit den dazugehörigen Tablaren bezüglich des Ein- beziehungsweise Auslagervorgangs Rücksicht genommen werden kann. An dem Regalbediengerät sind weiterhin in einer bevorzugten Ausgestaltung Mittel zum Scannen von an dem Lagergut individuell vorhandenen Codes für Lagergutkennwerte vorhanden, die individuelle Kennwerte für das Lagergut darstellen und zur Erfüllung hoher Sicherheitsanforderungen dienen.

Eine besonders vorteilhafte Ausgestaltung der erfindungsgemäßen Regallagervorrichtung zeichnet sich dadurch aus, dass an dem Regalbediengerät weiterhin Mittel zum Ermitteln des Gewichtes einzelner Lagerguts vorhanden sind, wobei die Robotereinrichtung das jeweils einzelne Lagergut diesen Mitteln zuführt und die ermittelten Gewichtswerte mit der Speichereinrichtung beziehungsweise dem Materialflussrechner abgeglichen werden.

Eine konstruktiv besonders einfache und vorteilhafte Ausgestaltung, die eine dauerhaft zuverlässige Konstruktion gewährleistet, zeichnet sich dadurch aus, dass die Regallagereinrichtung Tablare aufweist, in denen das Lagergut lagerbar ist und die beim Ein-/Auslagervorgang zeitweise auf das Regalbediengerät verbracht werden und die Robotereinrichtung auf das einzelne, auf dem jeweiligen Tablar lagernde, Lagergut zugreift.

Die Tablare können bevorzugt innerhalb der Regallagervorrichtung schubladenartig gelagert sein. Sobald das Regalbediengerät die entsprechende von der Steuereinrichtung vorgegebene Position erreicht hat, wird das jeweilige Tablar ausgezogen und an dem Regalbediengerät zentriert. Daran anschließend kann der Ein- beziehungsweise Auslagervorgang des innerhalb der Tablare angeordneten individuellen Lagerguts beziehungsweise des innerhalb des Behältnisses angeordneten Lagerguts über die Robotereinrichtung erfolgen.

Bevorzugt ist die Robotereinrichtung als Portalrobotereinrichtung ausgebildet.

Das erfindungsgemäße Verfahren zum Betreiben der Regallagervorrichtung der oben genannten Art ist durch die Merkmale des unabhängigen Anspruchs 9 gegeben. Vorteilhafte Ausgestaltungen und Weiterbildungen sind Gegenstand der von dem unabhängigen Anspruch 9 direkt oder indirekt abhängigen Ansprüche.

Das erfindungsgemäße Verfahren zeichnet sich demgemäß dadurch aus, dass auf/an dem Regalbediengerät eine Robotereinrichtung eingesetzt wird, die von der Steuereinrichtung derart angesteuert wird, dass beim Ein-/Auslagervorgang das Lagergut als Einzelteil gehandhabt wird, das heißt eine Kommissionierung auf dem Regalbediengerät vorgenommen wird.

Eine besonders bevorzugte Ausgestaltung des erfindungsgemäßen Verfahren zeichnet sich dadurch aus, dass in der Wareneingangs-/ausgangseinrichtung auf dem Regalbediengerät zumindest ein Behältnis angeordnet wird, das Regalbediengerät gesteuert von der Steuereinrichtung eine vorgegebene Einlager-/Auslagerposition anfährt, das Lagergut als Einzelteil von der Robotereinrichtung aus der Regallagereinrichtung in das Behältnis eingelagert beziehungsweise von dem Behältnis in die Regallagereinrichtung ausgelagert wird, wobei sich als besonders vorteilhaft herausgestellt hat, das Verfahren so auszugestalten, dass das Lagergut innerhalb der Regallagereinrichtung in Tablaren gelagert wird, die beim Ein-/Auslagervorgang auf/an das Regalbediengerät zeitweise umgesetzt werden und auf die die Robotereinrichtung zugreift, um das einzelne Lagergut zu handhaben.

Eine besonders vorteilhafte Ausgestaltung des erfindungsgemäßen Verfahrens, das eine hohe Betriebssicherheit gewährleistet, einen hohen Informationsfluss ermöglicht und dadurch eine dauerhaft zuverlässige Funktion umgesetzt werden kann, zeichnet sich dadurch aus, dass die Robotereinrichtung beim Ein-/Auslagern das einzelne Lagergut einer Vermessungseinrichtung zum Vermessen der Geometrie des einzelnen Lagerguts zuführt und die gemessenen Daten mit der Speichereinrichtung abgeglichen werden und/oder zeichnet sich dadurch aus, dass die Robotereinrichtung beim Ein-/Auslagern das einzelne Lagergut einer Scannereinrichtung zum Scannen individueller Kenndaten des Lagerguts zuführt und diese gescannten Kenndaten mit der Speichereinrichtung abgeglichen werden und/oder ist dadurch gekennzeichnet, dass die Robotereinrichtung beim Ein-/Auslagern das einzelne Lagergut einer Wiegeeinrichtung zum Wiegen des Lagerguts zuführt und die Wiegedaten mit der Speichereinrichtung abgeglichen werden.

Bei der erfindungsgemäßen Regallagervorrichtung kann beispielsweise ein Ablauf zum Einlagern von Lagergut wie folgt ablaufen. In einem übergeordneten Warenwirtschaftssystem steht ein Auftrag an zur Einlagerung eines Behälters. Der Auftrag wird an den Materialflussrechner weitergegeben, der die Stellplatzverwaltung und Auftragsabwicklung übernimmt. Daran anschließend wird der Behälter in das Regalbediengerät gestellt und die Größe des Gebindes beziehungsweise des Lagerguts gemessen. Das Lagergut kann beispielsweise aus unterschiedlich großen Flaschen mit unterschiedlichen Verschlüssen bestehen. Die gemessenen Größenwerte werden mit dem Materialflussrechner abgestimmt. Daran anschließend wird das Gewicht und der Barcode beziehungsweise die individuellen Kennwerte des einzelnen Lagerguts jeweils gemessen beziehungsweise eingelesen und auf Grundlage dieser Validierung eine Abstimmung mit dem Materialflussrechner herbeigeführt. Daran anschließend führt das Regalbediengerät eine Transportfahrt an den vorbestimmten Regalplatz innerhalb der Regallagereinrichtung aus. Sobald diese Position erreicht ist, wird über die Robotereinrichtung mit der Einlagerung des individuellen Lagerguts von dem Behälter in das Tablar beziehungsweise in die Regallagereinrichtung begonnen. Nach Abwicklung des Auftrags fährt das Regalbediengerät wieder in seine Ausgangsposition in der Wareneingangseinrichtung zurück. Die Einlagerung in das Tablar kann beispielsweise geordnet, zum Beispiel nach Größe, erfolgen.

Trifft ein Auftrag zur Kommissionierung ein, fährt das Regalbediengerät an die entsprechende vorbestimmte Position, die der Materialflussrechner aufgrund seiner Stellplatzverwaltung in Verbindung mit der individuellen Auftragsabwicklung vorgibt. Das Tablar wird ausgezogen, zentriert und die Robotereinrichtung entnimmt aus dem Tablar das individuelle Lagergut und lagert es in den an dem Regalbediengerät angeordneten Behälter ein. Die Lagerung kann dabei chaotisch erfolgen. Ist die Einlagerung abgeschlossen, fährt das Regalbediengerät gegebenenfalls zu einer weiteren vorbestimmten Position, um weiteres Lagergut individuell im Behälter einzulagern. Nach Auftragsende fährt das Regalbediengerät mit dem Behälter mit kommissionierten Lagergut zu der Warenausgangseinrichtung. Im Ergebnis ist es bei der erfindungsgemäßen Regallagervorrichtung so, dass nur die Teile des Lagerguts vor Ort am Regalbediengerät ausgelagert werden, die dem kundenspezifischen Auftrag entsprechen, so dass unnötige Transportwege von Behältern, aus denen nur bestimmte Lagerteile benötigt werden, nicht vorkommen.

Der Pickvorgang findet somit direkt auf dem Regalbediengerät statt und muss nicht separat wie im Stand der Technik manuell oder halbautomatisch im Warenausgangs beziehungsweise im Wareneingangsbereich durchgeführt werden.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: stark schematisierter Detailausschnitt aus einer Regallagervorrichtung mit einem Regalbediengerät mit einer Robotereinrichtung zum individuellen Handhabens des Lagerguts,

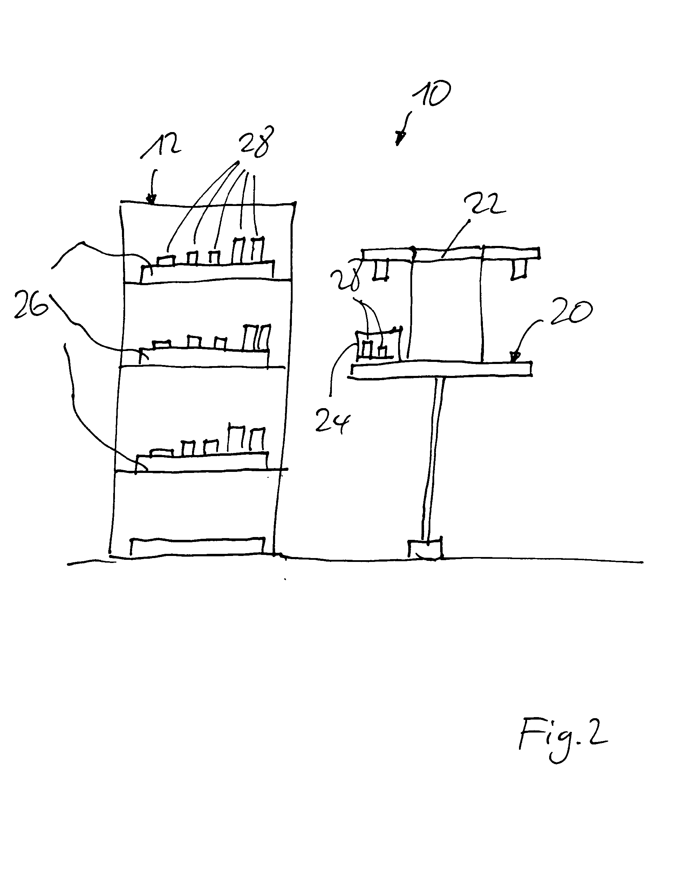

- Fig. 2: stark schematische Stirnansicht der Regallagervorrichtung gemäß Fig. 1,
- Fig. 3: schematisches Flussdiagramm der Steuerung des Materialflussrechners betreffend das Regalbediengerät und Automatisierungsgerät Portalroboter,
- Fig. 4: schematisches Flussdiagramm der Abläufe beim Einlagern eines Behälters in die Regallagervorrichtung,
- Fig. 5: stark schematisierte Perspektivendarstellung der Grundbauelemente der Regallagervorrichtung gemäß fig. 1,
- Fig. 6: schematische Vorderansicht des Regalbediengeräts mit Robotereinrichtungen,
- Fig. 7: schematische Vorderansicht der Robotereinrichtung von Fig. 6,
- Fig. 8: schematische Seitenansicht des Regalbediengeräts mit Robotereinrichtung,
- Fig. 9: schematische Seitenansicht der Robotereinrichtung gemäß Fig. 8,
- Fig. 10: schematische Draufsicht auf das Regalbediengerät mit Robotereinrichtung und
- Fig. 11: schematische Draufsicht auf die Robotereinrichtung gemäß Fig. 10.

### WEGE ZUM AUSFÜHREN DER ERFINDUNG

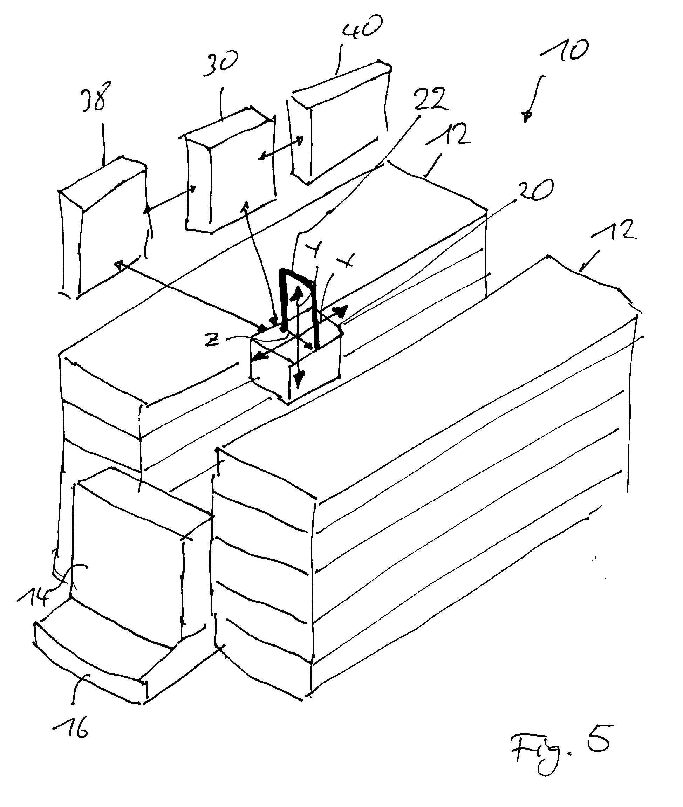

In Fig. 5 ist stark schematisiert die Gesamtsituation innerhalb einer Regallagervorrichtung 10 in einer Perspektive dargestellt. Die Regallagervorrichtung 10 weist zwei parallel beabstandete Regallagereinrichtungen 12 auf, in denen das Lagergut gelagert wird. Zwischen den Regallagereinrichtungen 12 befindet sich eine Lagergasse, innerhalb derer ein Regalbediengerät 20 verfahrbar vorhanden ist, sowohl in Längsrichtung (X-Richtung), in Höhenrichtung (Y-Richtung) und gegebenenfalls in Querrichtung (Z-Richtung).

Das Regalbediengerät 20 steht mit einem Materialflussrechner 30 mit Speichereinrichtung 40 und Steuereinrichtung 38 in Kommunikationsverbindung, wobei das Regalbediengerät 20 je nach vorliegendem Auftrag an die entsprechenden Positionen fährt und den gewünschten Ein- beziehungsweise Auslagervorgang vornimmt, wozu das Lagergut 28 in einem oder aus einem an dem Regalbediengerät 20 temporär gelagerten Behälter ein- oder ausgelagert wird.

Im vorderen Endbereich ist schematisiert eine Puffereinrichtung 14 für die ein- beziehungsweise auszulagernden Behältnissen dargestellt, der eine Wareneingangs-/ausgangseinrichtung 16 vorgelagert ist.

An dem Regalbediengerät 20 ist eine Robotereinrichtung 22 vorhanden, die auf das innerhalb eines an dem Regalbediengerät 20 vorhandenen Behältnisses eingelagerten Lagerguts zugreift - in Abhängigkeit der Steuerung durch die Steuereinrichtung 38 beziehungsweise dem Materialflussrechner 30 - und das Lagergut aus dem Behälter in die Regallagereinrichtung 12 einlagert beziehungsweise von der Regallagereinrichtung 12 in den Behälter auslagert. Die individuelle Ein- beziehungsweise Auslagerung des Lagerguts erfolgt somit direkt an dem Regalbediengerät 20, ohne dass innerhalb der Wareneingangs-/ausgangseinrichtung 16 zusätzliche Sortiermaßnahmen manuell vorgenommen werden müssen und ohne das vollständige Behälter von oder zu der Wareneingangs-/ausgangseinrichtung 16 transportiert werden müssen, um dort entsprechend kommissioniert zu werden.

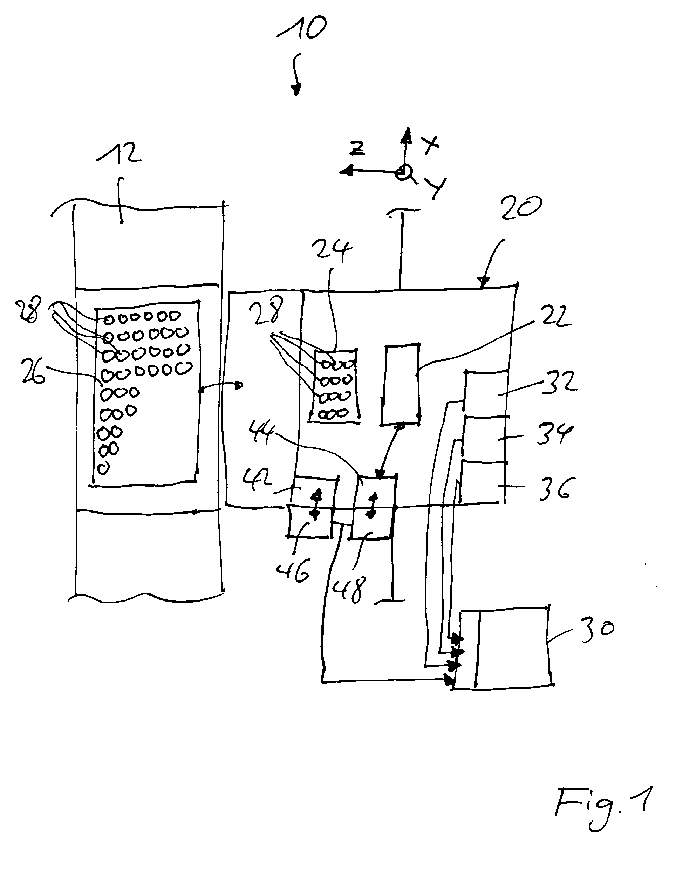

Fig. 1 zeigt stark schematisiert eine Detaildraufsicht auf das Regalbediengerät 20. An dem Regalbediengerät 20 ist, stark schematisiert dargestellt, ein erstes Aggregat 46 zum Verfahren des Regalbediengeräts 20 in X-, Y- und Z-Richtung vorhanden, das von einer ersten Steuereinrichtung 42 angesteuert wird. Weiterhin ist eine zweite Steuereinrichtung 44 vorhanden, die ein Aggregat 48 zur Steuerung der Bewegung der Robotereinrichtung 20 beim Ein- beziehungsweise Auslagervorgang des Lagerguts 28 umfasst. Die Steuereinrichtung 42, 44 stehen mit dem Materialflussrechner 30 in Kommunikationsverbindung.

Weiterhin sind an dem Regalbediengerät 20 Mittel 32 zum Scannen des Lagerguts, Mittel 34 zum Vermessen der Geometrie des Lagerguts und Mittel 36 zum Wiegen des Lagerguts vorhanden.

Auf dem Regalbediengerät 20 ist ein Behälter 24 temporär angeordnet, der zur Aufnahme des Lagerguts 28 dient. In der Regallagereinrichtung 12 sind Tablare 26 angeordnet, die ebenfalls zur Aufnahme von Lagergut dienen. Innerhalb der Tablare 26 ist das Lagergut geordnet eingelagert. Die Lagerung des Lagerguts 28 innerhalb des Behältnisses 24 auf dem Regalbediengerät 20 erfolgt chaotisch über die Robotereinrichtung 22.

Die Robotereinrichtung 22 erfasst die einzelnen Lagergutgegenstände 28 innerhalb des Behältnisses 24 und führt sie vor dem Einlagern den Mitteln 32 zum Scannen, den Mitteln 34 zum Vermessen und den Mitteln 36 zum Wiegen zu, wobei die ermittelten Werte an den Materialflussrechner 30 übermittelt, abgeglichen und entsprechend abgespeichert werden. Daran anschließend erfolgt das Einlagern des Lagerguts 28 in den entsprechenden Tablar 26, der zuvor aus der Regallagereinrichtung 12 schubladenmäßig herausgezogen, am Regalbediengerät 20 fixiert und anschließend mit Lagergut 28 beladen wird. Nach Abschluss des Beladevorgangs, wird das entsprechende Tablar 26 wieder in die Regallagereinrichtung 12 eingeschoben.

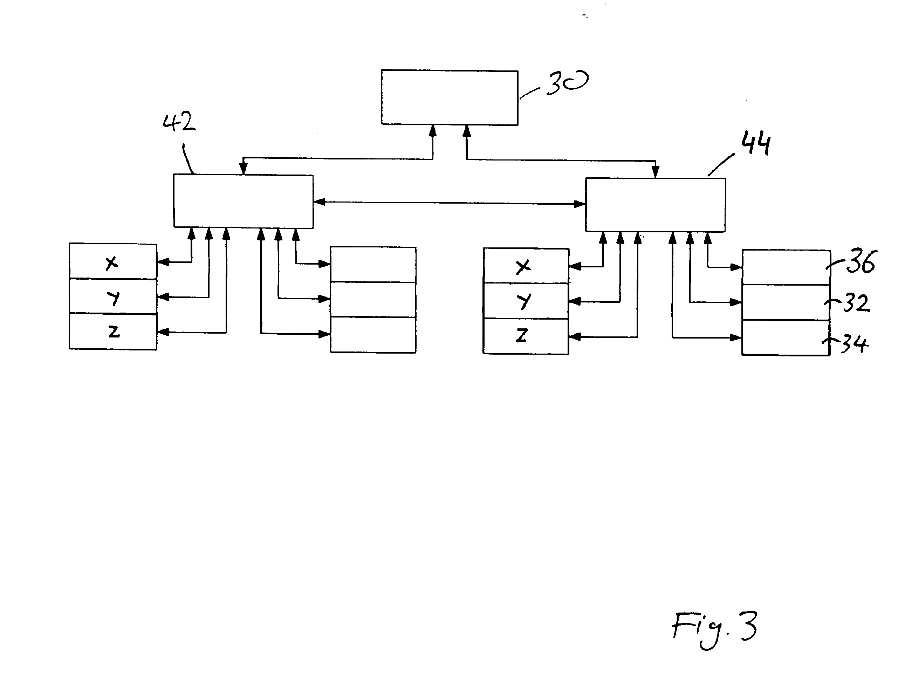

In Fig. 3 ist in einem Blockschaltbild der Zusammenhang zwischen Materialflussrechner 30 und der Ansteuerung der einzelnen Komponenten des Regalbediengeräts stark schematisiert dargestellt. Über die Steuereinrichtung 42 wird die Bewegung des Regalbediengeräts innerhalb der Regallagervorrichtung in X-, Y- und Z-Richtung gesteuert. Über die Steuereinrichtung 42 werden parallel Mittel zum Zentrieren von Behälter 24 und Tablare 26 angesteuert, die aktiviert werden, sobald das Regalbediengerät 20 seine spezifische Einbeziehungsweise Auslagerposition innerhalb der Regallagervorrichtung 10 erreicht hat.

Über die Steuereinrichtung 44 werden die Bewegungen der Robotereinrichtung 22 des Regalbediengeräts 20 gesteuert. Die Robotereinrichtung 22, die bevorzugt als Portalroboter ausgebildet ist, kann sowohl in X-, Y- und Z-Richtung mit entsprechenden Greiferelementen verfahren werden, um das Lagergut 28 innerhalb des Behälters 24 beziehungsweise des Tablars 26 individuell zu ergreifen und einbeziehungsweise auszulagern. Des Weiteren steuert die Steuereinrichtung 44 die Bewegung der Robotereinrichtung dahingehend, dass das von der Robotereinrichtung 22 aufgenommene Lagergut 28 den Mitteln 32 zum Scannen, den Mitteln 34 zum Vermessen und den Mitteln 36 zum Wiegen zugeführt werden. Die Mittel 32 zum Scannen können beispielsweise einen Matrixscanner aufweisen. Die Mittel 34 zum Vermessen können ein Lasermessgerät aufweisen. Die durch die Mittel 34, 34, 36 ermittelten Messwerte werden an den Materialflussrechner 30 übersandt, abgeglichen und abgespeichert.

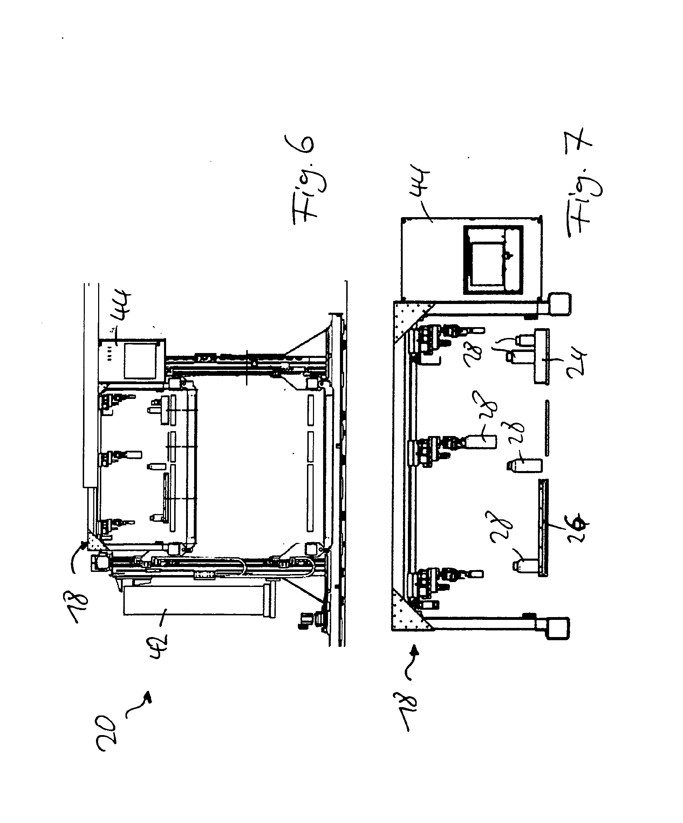

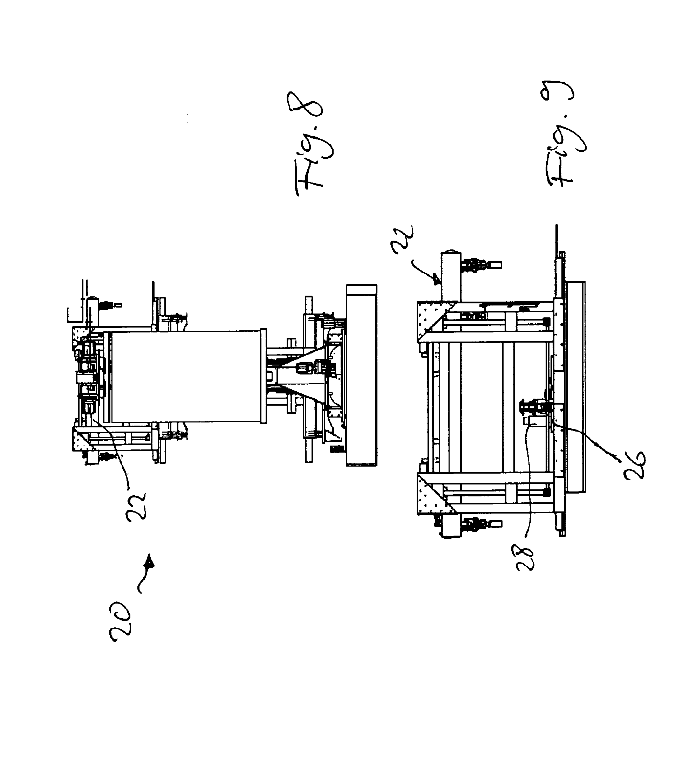

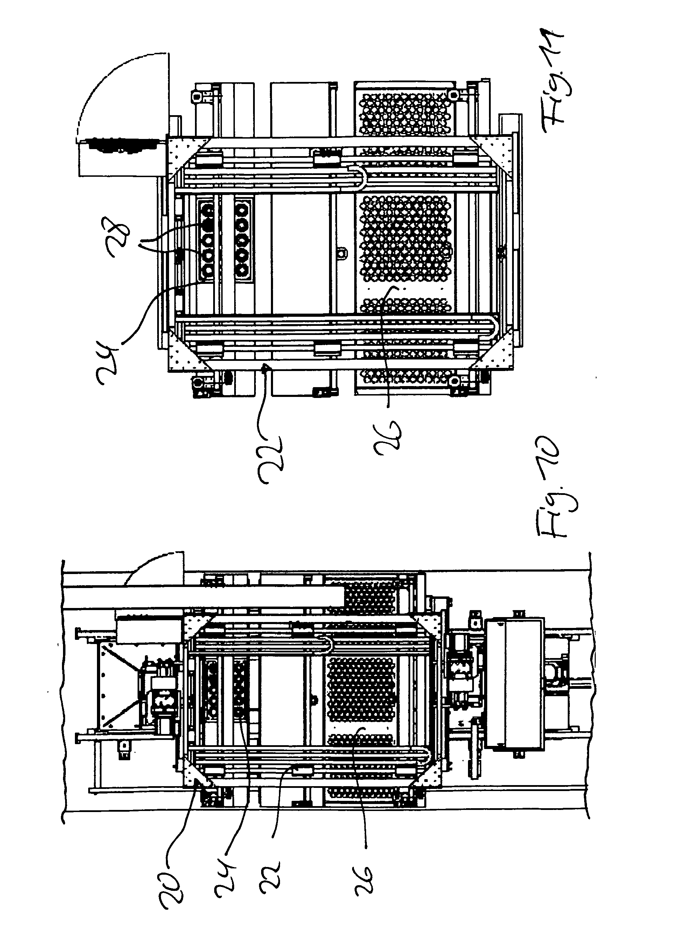

In den Figuren 6 bis 10 ist ein Ausführungsbeispiel eines erfindungsgemäßen Regalbediengeräts 20 mit Robotereinrichtung 22 schematisch dargestellt, bei der die Robotereinrichtung 22 als Portalroboter ausgebildet ist.

Das Regalbediengerät 20 ist dabei so ausgebildet, dass es zumindest einen Behälter 24 mit Lagergut 28 und ein Tablar 26 mit oder ohne Lagergut 28 aufnehmen kann (siehe Fig. 7).

Mit der erfindungsgemäßen Regallagervorrichtung ist die Erstellung eines automatisierten Musterversandlagers mit einem äußerst wirtschaftlichen Betrieb möglich.

In einem Ausführungsbeispiel geht es darum, Kunststoffflaschen in verschiedenen Größen und unterschiedlichen Gebinden in einem Tablarlager ein- beziehungsweise auszulagern. Innerhalb der Regallagervorrichtung 10 werden Ladehilfsmittel wie zum Beispiel Paletten, Tablare 26 oder Behälter 24 in einem Einlagerpuffer gespeichert. Anschließend werden die Ladehilfsmittel von dem Regalbediengerät 20 aufgenommen und zu der entsprechenden Position der jeweiligen Tablare 26 innerhalb der Regallagereinrichtung 12 transportiert. Im Ausführungsbeispiel sind als Lagergut Flaschen vorhanden, die anhand ihrer Größe "größenrein" in die Tablare 26 sortiert werden. Hierzu wird das entsprechende Tablar 26 nach Erreichen der entsprechenden Position des Regalbediengeräts 20 aus der Regallagereinrichtung 12 gezogen, zentriert und mittels der Robotereinrichtung 22 bestückt.

Bevor die Tablare 26 mit Lagergut 28 bestückt werden, werden die Flaschen vermessen, gewogen und Mittels Barcode identifiziert. Nach Bestückung wird das Tablar 26 wieder in die gleiche Regalposition eingelagert und die nächste Flaschengröße wird einsortiert. Die Einsortierung durch die Robotereinrichtung 22 erfolgt beispielsweise von groß nach klein beginnend mit der größten Flasche. Die Auslagerung der Flaschen beziehungsweise des Lagerguts 28 erfolgt von Tablaren 26 in die Ladehilfsmittel (Behälter 24) gemäß den vorliegenden jeweils aktuellen Aufträgen, die über ein Warenwirtschaftssystem dem Materialflussrechner entsprechend mitgeteilt werden, der die Stellplatzverwaltung und Auftragsabwicklung übernimmt.

Die Auslagerung beginnt beispielsweise mit der kleinsten und endet mit der größten Flasche. Bei der Auslagerung ist es nicht erforderlich, dass die Flaschen gewogen oder identifiziert werden, da die individuellen Daten des eingelagerten Lagerguts bereits beim Einlagervorgang identifiziert und abgespeichert worden sind. Nach der vollständigen Bestückung des Behältnisses 24 wird das Regalbediengerät 20 einem Auslagerpuffer zugeführt und von dort über eine Förderanlage zu entsprechenden Pufferplätzen transportiert.

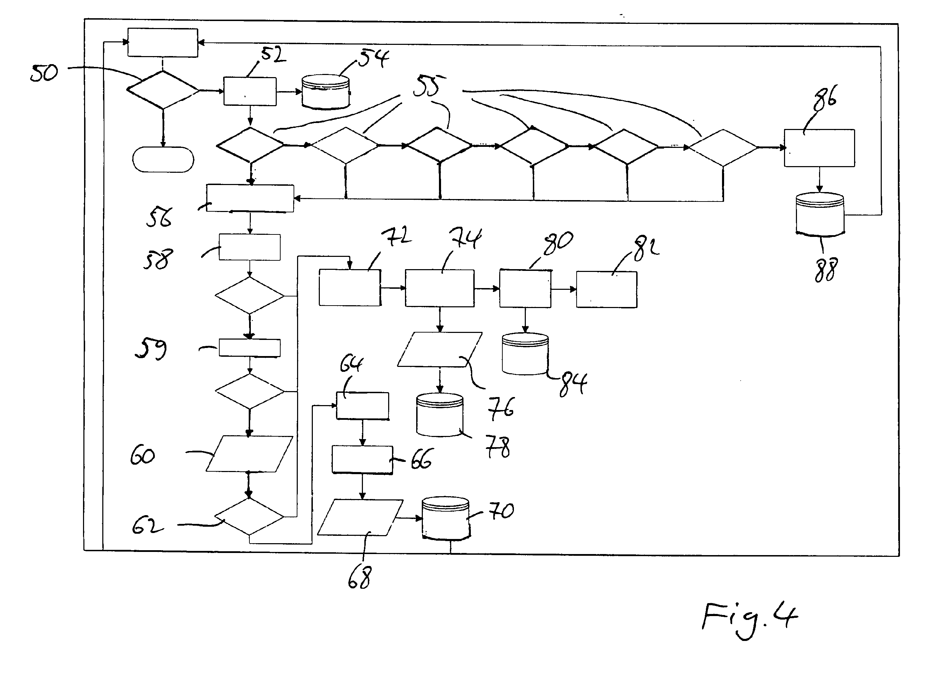

In Fig. 4 ist stark schematisiert in einem Ablaufdiagramm der Einlagervorgang anhand eines konkreten Ablaufs dargestellt.

Wird vom Warenwirtschaftssystem ein Auftrag zum Einlagern gemeldet, stellt das System zunächst fest, ob an dem Regalbediengerät 20 der Behälter 24 mit dem Lagergut 28 beziehungsweise dem Gebinde bereit steht (Bezugszeichen 50). Ist dies der Fall wird das im Behälter 24 vorhandene Gebinde bezüglich seiner Geometrie vermessen (Bezugszeichen 52) und die Messdaten werden gespeichert (Bezugszeichen 54).

Aufgrund der Messdaten wird dann ermittelt um welchen Gebindetyp es sich handelt (Bezugszeichen 55) und daran anschließend wird das Gebinde mittels der Robotereinrichtung 22 aus dem Behälter 24 entnommen (Bezugszeichen 56), gescannt (Bezugszeichen 58) und gewogen (Bezugszeichen 59). Sämtliche ermittelten Daten werden dem Materialflussrechner 30 übermittelt (Bezugszeichen 60) und es erfolgt eine Verifizierung (Bezugszeichen 62).

Ist die Verifizierung erfolgreich und hat das Regalbediengerät 20 seine vom Materialflussrechner 30 berechnete Position innerhalb der Regallagervorrichtung 10 erreicht, wird das benötigte Tablar 26 aus der Regallagereinrichtung 12 herausgeholt (Bezugszeichen 64) und das Gebinde wird mittels Robotereinrichtung 22 aus dem Behälter 24 in das jeweilige Tablar 26 gestellt (Bezugszeichen 66), wobei daran anschließend die Stellplatzdaten zum Materialflussechner 30 gesandt werden (Bezugszeichen 68), der diese Daten dann abspeichert (Bezugszeichen 70).

Ist die Verifizierung (Bezugszeichen 62) nicht erfolgreich, wird das Gebinde wieder in den Behälter 24 zurückgestellt (Bezugszeichen 72), in einem Speicher als nicht verifiziertes Lagergut eingelagert (Bezugszeichen 72), wobei die entsprechenden Stellplatzdaten innerhalb des Speichers an den Materialflussrechner 30 gesandt werden (Bezugszeichen 76), der diese Daten dann abspeichert (Bezugszeichen 78). Der in dem Turmspeicher nicht verifizierte Behälter 24 kann von einem Werker über den Materialflussrechner 30 angefordert werden (Bezugszeichen 80) und individuell bearbeitet werden (Bezugszeichen 82). Beim Entfernen des Behälters 24 aus dem Turmspeicher werden die entsprechenden Stellplatzdaten gelöscht (Bezugszeichen 84).

Wird bei der Gebindevermessung (Bezugszeichen 52) festgestellt, dass kein definierter Gebindetyp vorhanden ist, erfolgt der Abtransport des leeren Behälters zu einem Transferbehälterpuffer (Bezugszeichen 86), dessen Stellplatzdaten gespeichert werden (Bezugszeichen 88).

Mit der erfindungsgemäßen Regallagervorrichtung 10 in Verbindung dem Regalbediengerät 20 mit Robotereinrichtung 22 wird bei Abarbeitung eines Auftrages zur Kommissionierung von Waren aus der Regallagervorrichtung 10 die Kommissionierung auf dem Regalbediengerät 20 unter Einsatz der Robotereinrichtung 22 vorgenommen. Damit wird garantiert, dass nur die Teile beziehungsweise das Lagergut 28 jeweils individuell ausgelagert wird, das dem entsprechenden Auftrag entspricht.

Das Regalbediengerät transportiert keine Behälter zu der Warenausgangseinrichtung, der Lagergut enthält, das nicht im entsprechenden jeweiligen Auftrag entspricht. Der kommissionierte Behälter kommt vollständig entsprechend dem jeweiligen kundenspezifischen Auftrag gepackt am Warenausgang an. Personalintensive Sortier- und Validierungsaufgaben können somit weitestgehend entfallen. Die erfindungsgemäße Regallagervorrichtung 10 gewährleistet eine hohe Betriebssicherheit, da die Ein- beziehungsweise Auslagervorgänge individualisiert und automatisiert erfolgen, so dass Kollisionen während des Transports praktisch ausgeschlossen sind.

Mit der erfindungsgemäßen Regallagervorrichtung 10 ist die Erstellung automatisierter Versandlager für Lagergut unterschiedlichster Art und Weise möglich, die wirtschaftlich betrieben werden können, eine dauerhaft zuverlässige Funktion gewährleisten und eine hohe Betriebssicherheit umsetzen.

## Patentansprüche

1. Regallagervorrichtung (10) zum wahlweisen Ein-/Auslagern von Lagergut (28) mit
- einer Regallagereinrichtung (12),
- einer Wareneingangs-/ausgangseinrichtung (16),
- einem Regalbediengerät (20) zum Transport des Lagerguts (28) beim Ein-/Auslagervorgang, das heißt von der Wareneingangs-/ausgangseinrichtung (16) zur Regallagereinrichtung (12) und umgekehrt,
- einer Steuereinrichtung (38) zum Steuern der Bewegung des Regalbediengeräts (20),
- einer Speichereinrichtung (40) zum Speichern der relevanten Daten des Lagerguts (28),
- einem Materialflussrechner (30),
- Mitteln zum Übergeben des Lagerguts (28) zwischen Wareneingangs-/ausgangseinrichtung (16), Regalbediengerät (20) und Regallagereinrichtung (12),
- **dadurch gekennzeichnet, dass**
- auf/an dem Regalbediengerät (20) eine Robotereinrichtung (22) angeordnet ist, die mit einer Steuereinrichtung (38), der Speichereinrichtung (40) und/oder dem Materialflussrechner (30) in Kommunikationsverbindung steht,
- auf/an dem Regalbediengerät (20) zumindest ein Behältnis (24) für das Lagergut vorhanden ist,
- die Robotereinrichtung (22) das Lagergut (28) in Abhängigkeit der Kommunikation mit der Steuereinrichtung (38), der Speichereinrichtung (40) und/oder dem Materialflussrechner (30) beim Ein-/Auslagervorgang jeweils als Einzelteile handhabt und aus der Regallagereinrichtung in das Behältnis (24) einlagert oder aus dem Behältnis (24) in die Regallagereinrichtung auslagert, das heißt eine Kommissionierung in oder aus dem Behältnis (24) auf dem Regalbediengerät (20) stattfindet.

2. Regallagervorrichtung nach Anspruch 1,
- **dadurch gekennzeichnet, dass**
- das Regalbediengerät (20) Mittel (32,34, 36) zum Ermitteln der individuellen Kenndaten des einzelnen Lagerguts (28) aufweist, wobei die Robotereinrichtung (22) das Lagergut (28) diesen Mittel beim Ein-/Auslagervorgang zuführt und die ermittelten Werte an die Steuereinrichtung (28), Speichereinrichtung (40) und/oder den Materialflussrechner (30) übermittelt und abgeglichen werden.

3. Regallagervorrichtung nach Anspruch 2,
- **dadurch gekennzeichnet, dass**
- Mittel (34) zum Ermitteln der Geometrie des Lagerguts (28) vorhanden sind.

4. Regallagervorrichtung nach Anspruch 2,
- **dadurch gekennzeichnet, dass**
- Mittel (32) zum Scannen von an dem Lagergut (28) vorhandenen Codes für Lagergutkennwerte vorhanden sind.

5. Regallagervorrichtung nach Anspruch 2,
- **dadurch gekennzeichnet, dass**
- Mittel (36) zum Ermitteln des Gewichts des einzelnen Lagerguts (28) vorhanden sind.

6. Regallagervorrichtung nach einem oder mehreren der vorstehenden Ansprüche,
- **dadurch gekennzeichnet, dass**
- die Regallagereinrichtung (12) Tablare (26) aufweist, in denen das Lagergut (28) lagerbar ist und die beim Ein-/Auslagervorgang zeitweise auf das Regalbediengerät (20) verbracht werden und die Robotereinrichtung (22) auf das einzelne, auf dem jeweiligen Tablar (26) lagernde, Lagergut (28) zugreift.

7. Regallagervorrichtung nach Anspruch 6,
- **dadurch gekennzeichnet, dass**
- die Tablare (26) innerhalb der Regallagervorrichtung (12) schubladengelagert vorhanden sind.

8. Regallagervorrichtung nach einem oder mehreren der vorstehenden Ansprüche,
- **dadurch gekennzeichnet, dass**
- die Robotereinrichtung (22) als Portalrobotereinrichtung ausgebildet ist.

9. Verfahren zum Betreiben einer Regallagervorrichtung, insbesondere nach einem oder mehreren der vorstehenden Ansprüche mit
- einer Regallagereinrichtung (12)
- einer Wareneingangs-/ausgangseinrichtung (16),
- einem Regalbediengerät (20) zum Transport des Lagerguts (28) beim Ein-/Auslagervorgang, das heißt von der Wareneingangs-/ausgangseinrichtung (16) zur Regallagereinrichtung (12) und umgekehrt,
- einer Steuereinrichtung (38) zum Steuern der Bewegung des Regalbediengeräts (20),
- einer Speichereinrichtung (40) zum Speichern der relevanten Daten des Lagerguts (28),
- einem Materialflussrechner (30),
- Mitteln zum Übergeben des Lagerguts (28) zwischen Wareneingangs-/ausgangseinrichtung (16), Regalbediengerät (20) und Regallagereinrichtung (12),
- **dadurch gekennzeichnet, dass**
- auf/an dem Regalbediengerät eine Robotereinrichtung eingesetzt wird, die von der Steuereinrichtung derart angesteuert wird, dass beim Ein-/Auslagervorgang das Lagergut als Einzelteil gehandhabt wird, das heißt eine Kommissionierung auf dem Regalbediengerät vorgenommen wird.

10. Verfahren nach Anspruch 9,
- **dadurch gekennzeichnet, dass**
- in der Wareneingangs-/ausgangseinrichtung (16) auf dem Regalbediengerät (20) zumindest ein Behältnis (24) angeordnet wird, das Regalbediengerät (20) gesteuert von der Steuereinrichtung (28) eine vorgegebene Einlager-/Auslagerposition anfährt, das Lagergut (28) als Einzelteil von der Robotereinrichtung (22) aus der Regallagereinrichtung (10) in das Behältnis (24) eingelagert beziehungsweise von dem Behältnis (24) in die Regallagereinrichtung (10) ausgelagert wird.

11. Verfahren nach Anspruch 9 oder 10,
- **dadurch gekennzeichnet, dass**
- das Lagergut innerhalb der Regallagereinrichtung in Tablaren gelagert wird, die beim Ein-/Auslagervorgang auf/an das Regalbediengerät zeitweise umgesetzt werden und auf die die Robotereinrichtung zugreift, um das einzelne Lagergut zu handhaben.

12. Verfahren nach einem oder mehreren der vorstehenden Ansprüche 9 bis 11,
- **dadurch gekennzeichnet, dass**
- die Robotereinrichtung beim Ein-/Auslagern das einzelne Lagergut einer Vermessungseinrichtung zum Vermessen der Geometrie des einzelnen Lagerguts zuführt und die gemessenen Daten mit der Speichereinrichtung abgeglichen werden.

13. Verfahren nach einem oder mehreren der vorstehenden Ansprüche 9 bis 12,
- **dadurch gekennzeichnet, dass**
- die Robotereinrichtung beim Ein-/Auslagern das einzelne Lagergut einer Scannereinrichtung zum Scannen individueller Kenndaten des Lagerguts zuführt und diese gescannten Kenndaten mit der Speichereinrichtung abgeglichen werden.

14. Verfahren nach einem oder mehreren der vorstehenden Ansprüche 9 bis 13,
- **dadurch gekennzeichnet, dass**
- die Robotereinrichtung beim Ein-/Auslagern das einzelne Lagergut einer Wiegeeinrichtung zum Wiegen des Lagerguts zuführt und die Wiegedaten mit der Speichereinrichtung abgeglichen werden.

15. Verfahren nach einem oder mehreren der vorstehenden Ansprüche 9 bis 14,
- **dadurch gekennzeichnet, dass**
- sämtliche ermittelte individuellen Daten des einzelnen Lagerguts bezüglich Geometrie, individueller Kenndaten, Gewicht mit dem Materialflussrechner (30) abgeglichen werden.
